# EUROPÄISCHE PATENTSCHRIFT

(11) **EP 2 236 070 B1**
(45) Veröffentlichungstag und Bekanntmachung des Hinweises auf die Patenterteilung: **04.03.2015**
(21) Anmeldenummer: 10155863.3
(22) Anmeldetag: 09.03.2010
(51) Int. Cl.: A47L 9/10, A47L 7/00, A47L 7/04, A47L 9/12, B01D 46/00

(54) **Staubsauger mit Rippeneinrichtung**
Vacuum cleaner with fin device
Aspirateur doté d'un dispositif de nervure

(30) Priorität: 31.03.2009 DE 102009002052
(43) Veröffentlichungstag der Anmeldung: 06.10.2010
(73) Patentinhaber: BSH Bosch und Siemens Hausgeräte GmbH, 81739 München (DE)
(72) Erfinder: Böck, Armin, 97633 Grossbardorf (DE); Dockner, Daniel, 81827 München (DE); Hacker, Karin, 80634 München (DE)

(56) Entgegenhaltungen:
- DE-A1- 3 517 329
- DE-C1- 4 317 715
- US-A- 2 008 067
- US-A- 3 204 395

## Beschreibung

### Hintergrund der Erfindung

Die vorliegende Erfindung betrifft einen Staubsauger mit einer Motor-Gebläseeinheit zur Erzeugung eines Saugluftstroms, mit einer Staubabscheideeinheit zur Abscheidung von Staub, und mit einer Rippeneinrichtung, die zumindest eine erste Rippe aufweist, wobei ein erster Rippenabschnitt der ersten Rippe und ein zweiter Rippenabschnitt der ersten oder einer zweiten Rippe der Rippeneinrichtung bogenförmig ausgebildet ist.

### Stand der Technik

Aus der DE 43 17 715 C1 ist eine Filterkassette für einen Staubsauger bekannt, die aus einem kassettenartigen Grundrahmen und einem darin angelenkten Abdeckgitter besteht.

Aus der US 2,008,067 A oder der US 3,204,395 A sind Schutzgitter bekannt, bei dem ein erster Rippenabschnitt der ersten Rippe und ein zweiter Rippenabschnitt der ersten oder einer zweiten Rippe der Rippeneinrichtung bogenförmig ausgebildet sind.

Die US 2,008,067 A offenbart darüber hinaus, dass sich der erste und der zweite Rippenabschnitt berühren.

Die US 3,204,395 A offenbart darüber hinaus, dass zumindest die erste, die zweite und/oder eine weitere Rippe eine konstante Rippenhöhe aufweist.

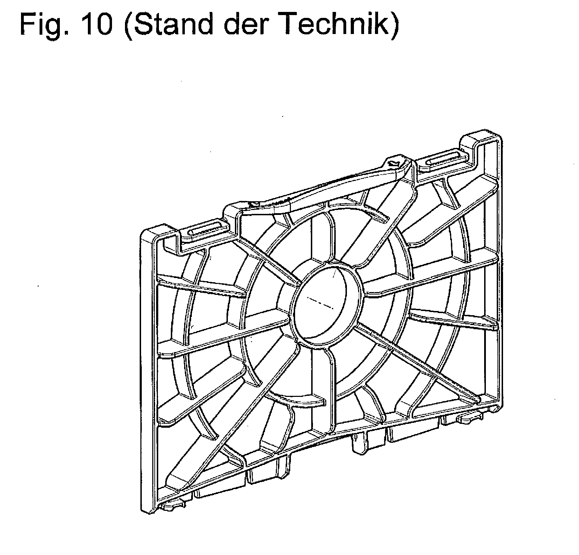

Weiter ist aus dem Stand der Technik ein Motorschutzfilter bekannt, das einen Rippenkörper, bestehend aus konzentrischen Kreisen mit überlagerten Rippen, aufweist, wie in Fig. 10 gezeigt. Dieser Rippenkörper weist unterschiedliche Rippenhöhen auf, wobei die Rippenränder in verschiedenen Ebenen liegen.

Im Übrigen sei noch auf die DE 35 17 329 A1 hingewiesen.

### Der Erfindung zugrundeliegende Aufgabe

Der Erfindung liegt die Aufgabe zugrunde, eine gegenüber dem Stand der Technik verbesserte und kostengünstige Rippeneinrichtung für einen Staubsauger bereitzustellen. Insbesondere soll mit einfachen und materialsparenden Mitteln eine für den Benutzer augenfällige Geometrie ermöglicht werden. Weiter soll durch die Rippeneinrichtung eine - Abstütz und/oder Sicherheitsfunktion ermöglicht werden können.

### Erfindungsgemäße Lösung

Die Bezugszeichen in sämtlichen Ansprüchen haben keine einschränkende Wirkung, sondern sollen lediglich deren Lesbarkeit verbessern.

Die Lösung der gestellten Aufgabe gelingt durch einen Staubsauger mit den Merkmalen des Anspruchs 1. Dieser zeichnet sich erfindungsgemäß dadurch aus,
- dass sich der erste und der zweite Rippenabschnitt berühren;
- dass zumindest die erste, die zweite und/oder eine weitere Rippe eine konstante Rippenhöhe aufweist; und
- dass die konstante Rippenhöhe einer der Rippen sich von der konstanten Rippenhöhe einer anderen Rippe unterscheidet.

Unter einem Staubsauger sind mit elektrischer Energie betriebene Geräte zur Aufnahme von Staub zu verstehen, wobei sowohl netzbetriebene als auch Batterie- oder Akku-Geräte eingeschlossen sind. Unter einer Staubabscheideeinheit ist eine Vorrichtung zu verstehen, in welcher die mit Schmutz beladene Saugluft von dem Schmutz gereinigt werden kann. Beispielsweise kann eine solche Staubabscheideeinheit einen Filterbeutel mit oder ohne Korb, oder einen Fliehkraftabscheider aufweisen. Vorteilhafter Weise kann sich die Staubabscheideeinheit in einem Staubraum befinden. Eine erfindungsgemäße Rippe kann die Form eines Stegs und/oder einer Wand annehmen, und kann in Rippenabschnitte unterteilt werden. Insbesondere besteht eine oval-, ellipsen-, kreis-, wellen-, kurven-, tropfen- und/oder wolkenförmige Rippe aus zumindest einem bogenförmig ausgebildeten Rippenabschnitt. Der Querschnitt einer Rippe kann rund, oval, rechteckig oder eine Kombination hieraus sein. Vorteilhafterweise kann zumindest eine Rippe eine Gitterstruktur bilden. Zwei Rippenabschnitte berühren sich, wenn sie zumindest einen gemeinsamen Punkt aufweisen. Insbesondere können die Rippenabschnitte hierbei sich tangential berühren, sich kreuzen, sich überschneiden, sich durchdringen oder stumpf aufeinander treffen.

Es ist ein erreichbarer Vorteil des erfindungsgemäßen Staubsaugers, dass sich sinnfällige Geometrien ergeben können, die dem Benutzer den Eindruck eines besonders reinlichen Staubsaugers vermitteln können. Dieser Gegeneindruck zu einem aufgrund des üblichen Gebrauchs verschmutzten Staubsaugers kann die subjektiv empfundene Reinigungswirkung des Staubsaugers noch weiter verstärken. Weiter kann durch die erfindungsgemäße Berührung der bogenförmigen Rippenabschnitte die mechanische Stabilität der Rippeneinrichtung erhöht, und eine verwindungssteife Rippeneinrichtung erreicht werden. Durch die erfindungsgemäße Rippeneinrichtung können lose und/oder bewegliche Teile des Staubsaugers, wie z.B. eine Staubabscheideeinheit, abgestützt werden. Weiter lässt sich eine Sicherheitsfunktion, wie z.B. ein Eingreifschutz realisieren, der insbesondere durch die erfindungsgemäße Gestaltung der Rippen erreichbar ist, die z.B. ein Gitter bilden können. Dieses Gitter kann ein Berühren von beweglichen Teilen durch den Benutzer vorteilhafterweise verhindern.

### Bevorzugte Ausgestaltung der Erfindung

Vorteilhafte Aus- und Weiterbildungen, welche einzeln oder in Kombination miteinander eingesetzt werden können, sind Gegenstand der abhängigen Ansprüche.

In einer bevorzugten Ausführung der Erfindung bildet wenigstens der erste, der zweite und/oder ein weiterer Rippenabschnitt einen Kreisbogen. Vorteilhafterweise kann der erste Rippenabschnitt, der an der ersten Rippe angeordnet ist, hierbei den zweiten Rippenabschnitt, der an der ersten oder an der zweiten Rippe angeordnet ist, berühren. Somit ist erreichbar, dass die Sinnfälligkeit der Struktur noch weiter verstärkt werden kann, um die subjektiv empfundene Reinigungswirkung des Staubsaugers noch weiter erhöhen zu können. Außerdem kann die mechanische Stabilität und/oder die Verwindungssteifigkeit der Rippeneinrichtung ebenfalls erhöht werden.

Die Erfindung weiterbildend ist vorzugsweise vorgesehen, dass wenigstens die erste, die zweite und/oder eine weitere Rippe kreisförmig ausgebildet ist. Insbesondere kann hierbei die erste Rippe kreisförmig ausgebildet sein, wobei der erste Rippenabschnitt der gesamten Rippe entsprechen kann, und der zweite Rippenabschnitt der zweiten Rippe den ersten Rippenabschnitt berührt. Es sind ferner Ausführungen möglich, in denen eine weitere Rippe kreisförmig ausgebildet ist, die besonders vorzugsweise den ersten und/oder den zweiten Rippenabschnitt berührt. Besonders vorzugsweise sind sämtliche Rippen der Rippeneinrichtung kreisförmig ausgebildet. Besonders vorzugsweise berühren sich hierbei zumindest zwei Rippen. Ist zumindest eine Rippe kreisförmig ausgebildet, kann die Sinnfälligkeit der Struktur noch weiter ausgebildet werden, und die mechanische Stabilität aufgrund der zumindest einen geschlossenen, kreisförmigen Rippe, noch weiter erhöht werden kann. Weiter ist ein leichtes Einbringen der Rippeneinrichtung in den Staubsauger erreichbar, da aufgrund der kreisförmig ausgebildeten Rippen ein Verkanten minimierbar sein kann.

Nach der Erfindung weist zumindest die erste, die zweite oder eine weitere Rippe eine konstante Rippenhöhe auf. Besonders vorzugsweise weisen sämtliche Rippen der Rippeneinrichtung eine konstante Rippenhöhe auf. Eine Rippe mit einer konstanten Rippenhöhe kann vorteilhafterweise eine einheitliche Rippenhöhe in eine Raumrichtung aufweisen. Hierdurch ist erreichbar, dass die Rippeneinrichtung leicht zu fertigen ist, und ihr Platzbedarf verringert werden kann.

Erfindungsgemäß ist vorgesehen, dass die konstante Rippenhöhe einer der Rippen sich von der konstanten Rippenhöhe einer anderen Rippe unterscheidet. Besonders vorzugsweise unterscheidet sich die konstante Rippenhöhe der ersten von der konstanten Rippenhöhe der zweiten Rippe. Besonders vorzugsweise unterscheidet sich die konstante Rippenhöhe einer Rippe von der konstanten Rippenhöhe einer anderen Rippe, wobei jeweils beide Rippen zumindest einen bogenförmig ausgebildeten Rippenabschnitt aufweisen, und beide Rippenabschnitte sich berühren. Vorteilhafterweise kann durch unterschiedliche Rippenhöhen eine verstärkte plastische Erscheinung des Rippenkörpers erreichbar sein. Weiter kann die Rippe mit der größten Rippenhöhe als Grifffläche zur Entnahme der Rippeneinrichtung aus dem Staubsauger verwendet werden.

Eine besonders bevorzugte Rippeneinrichtung weist zumindest einen Halterahmen auf. Besonders vorzugsweise sind die Rippen an dem Halterahmen angeordnet. Durch einen Halterahmen kann eine mechanische Befestigung zu Teilen oder Funktionsteilen des Staubsaugers hergestellt und/oder die die mechanische Stabilität der Rippeneinrichtung erhöht werden. Somit kann durch einen Halterahmen eine besonders zuverlässige Verbindung der Rippeneinrichtung mit dem Staubsauger ermöglicht werden. Besonders vorzugsweise besteht der Halterahmen aus Kunststoff, wodurch die mechanische Belastbarkeit der Rippeneinrichtung weiter erhöht werden kann. Zur Herstellung des Halterahmens können einfache und kostengünstige Herstellungsverfahren, wie z.B. Kunststoffspritzgussverfahren verwendet werden.

Die Erfindung weiterbildend ist vorzugsweise vorgesehen, dass zumindest ein Rippenrand aus der Rippeneinrichtung heraussteht. Hierdurch kann die Erscheinungsform der Rippeneinrichtung sinnfälliger gestaltet werden, da dem Benutzer ein herausstehender Rippenrand schneller ins Auge springen kann. Weiter können lose und/oder bewegliche Teile des Staubsaugers, z.B. eine Staubabscheideeinheit, besser abgestützt werden. Vorteilhafterweise kann eine Rippe mit einem aus der Rippeneinrichtung herausstehenden Rippenrand als Grifffläche zur Entnahme der Rippeneinrichtung aus dem Staubsauger verwendet werden.

Bei einer erfindungsgemäß bevorzugten Rippeneinrichtung liegen die aus der Rippeneinrichtung herausstehenden Rippenränder in zumindest zwei Ebenen. Hierbei können sowohl nur ein Rippenrand als auch mehrere Rippenränder aus der Rippeneinrichtung herausstehen. Besonders vorzugsweise liegen die aus dem Halterahmen herausstehenden Rippenränder in zumindest zwei Ebenen. Dies kann erreichbar sein, indem zumindest die konstante Rippenhöhe einer der Rippen sich von der konstanten Rippenhöhe einer anderen Rippe unterscheidet, oder indem zumindest eine Rippe unterschiedliche Rippenhöhen aufweist. Natürlich umfasst die Erfindung auch Kombinationen dieser beiden Möglichkeiten. Besonders vorzugsweise weisen Rippen, die jeweils eine konstante Rippenhöhe aufweisen und sich berühren unterschiedliche Rippenhöhen auf. Es ist ein erreichbarer Vorteil, dass diese Ausgestaltung die Sinnfälligkeit und die Plastizität der Rippeneinrichtung noch weiter fortbildet. Ist die Rippeneinrichtung in dem Saugluftstrom angeordnet und einer Staubabscheideeinheit, z.B. einem Staubbeutel, in Richtung des Saugluftstroms nachgelagert, kann hierdurch vorteilhafterweise ein flächiges Anliegen und/oder Ansaugen des Staubbeutels an die Rippeneinrichtung vermieden werden. Aufgrund der unterschiedlichen Höhen, in denen die Rippen enden, können Zwischenräume geschaffen werden, durch die Saugluft strömen kann, um einen Saugkraftverlust vermeiden zu können. Weiter kann zuverlässig ein Durchströmen der Rippeneinrichtung selbst bei vollem Staubbeutel erzielt werden. Es sind auch Ausführungen der Erfindung denkbar, in denen der Rippenrand einer Rippe in zumindest zwei Ebenen liegt, was z.B. durch eine wellenartige oder keilförmige Kontur der Rippe realisiert werden kann. Besonders vorzugsweise sind die Form der Rippe und/oder die Niveauübergänge abgerundet, um Beschädigungen, z.B. eines Staubbeutels, sowie Verletzungen des Benutzers vermeiden zu können.

Die Erfindung weiterbildend ist vorzugsweise vorgesehen, dass die Rippeneinrichtung in dem Saugluftstrom angeordnet ist. Besonders vorzugsweise erstrecken sich die Rippen in ihrer Rippenhöhe entlang des Saugluftstroms. Somit ist erreichbar, dass die Rippeneinrichtung während des bestimmungsgemäßen Betriebs des Staubsaugers von dem Saugluftstrom durchströmt wird, wobei der Saugluftstrom an den Rippen entlang strömt und diese dabei zumindest streift. Dies kann einen besonders geringen Durchströmwiderstand der Rippeneinrichtung ermöglichen, was demzufolge nur eine minimale Verringerung der Saugleistung des Staubsaugers bei Einbringen der Rippeneinrichtung in den Saugluftstrom zur Folge haben kann. Ist die Rippeneinrichtung in dem Saugluftstrom angeordnet, kann erreicht werden, dass Partikel an zumindest einer Rippe der Rippeneinrichtung aufgrund ihrer Größe hängen bleiben, und somit dem Saugluftstrom entnommen werden. Besonders vorzugsweise ist die Rippeneinrichtung vor beweglichen oder stromführenden Teilen,des Staubsaugers, wie z.B. der Motor-Gebläseeinheit angeordnet, um als Eingreifschutz ein Eingreifen und somit eine Verletzung des Benutzers vermieden zu können.

Eine erfindungsgemäß bevorzugte Rippeneinrichtung ist eine Abgabevorrichtung, um Stoffe in den Saugluftstrom abzugeben. Besonders vorzugsweise gibt die Rippeneinrichtung geruchsüberdeckende und/oder geruchsneutralisierende Stoffen in den Saugluftstrom ab. Hierdurch kann die Luft von üblen Gerüchen befreit werden, und die von dem Benutzer subjektiv empfundene Reinigungswirkung des Staubsaugers noch weiter erhöht werden. Besonders vorzugsweise gibt die Rippeneinrichtung Stoffe bestehend aus Einschlussverbindungen in den Saugluftstrom ab. Unter Einschlussverbindungen sind Verbindungen zu verstehen, die in Hohlräumen ihres Gitters eine Gastkomponente, wie z.B. Geruchspartikel aufnehmen, einlagern und/oder einschließen können. Hierbei kann das Gitter der Einschlussverbindung kanalartig und/oder schichtartig ausgebildet, und/oder ein Kristallgitter sein. Natürlich sind auch andere Gitterformen denkbar.

Besonders vorzugsweise gibt die Rippeneinrichtung Stoffe bestehend aus Käfigverbindungen, sogenannten Clathraten, in den Saugluftstrom ab. Unter Käfigverbindungen bzw. Clathraten sind Verbindungen zu verstehen, bei denen Hohlräume käfigartig von den Atom- und/oder Atomgruppen der Verbindung umschlossen werden, sodass eine Gastkomponente in den Hohlräumen eingelagert werden kann. Hierbei ist ein Clathrat eine besondere Art der Einschlussverbindung. Atome oder Moleküle der Clathrate können so angeordnet sein, dass sie zumindest einen Hohlraum umschließen, und für diesen umschlossenen Hohlraum einen Käfig darstellen können. Besonders vorzugsweise können einfache Molekularstrukturen, besonders vorzugsweise Geruchspartikel in die käfigartig umschlossenen Hohlräume der Clathrate eingelagert werden, wobei die Geruchspartikel besonders vorzugsweise mechanisch in dem Hohlraum festgehalten werden. Dies kann z.B. durch Ausbildung von Van-de-Waals-Wechselwirkungen geschehen. Es ist sind aber auch Ausführungsformen der Erfindung denkbar, in denen einfache Molekularstrukturen. z.B. Geruchspartikel über chemische Verbindungen in den Hohlräumen festgehalten werden. Durch die erfindungsgemäße Verwendung von Clathraten kann sichergestellt werden, dass bei Bekämpfung von Gerüchen keine schädlichen Reaktionsprodukte und Nebenwirkungen auftreten, da die Geruchspartikel besonders vorzugsweise mechanisch in den Hohlräumen eingelagert werden können. Im Gegensatz zu der Einlagerung der Geruchspartikel in Hohlräume einer Verbindung, z.B. eines Clathrats, beruht die Wirkungsweise der Aktivkohle auf Adsorption, wobei sich die Geruchspartikel an der großen inneren Oberfläche anlagern können.

Ein erfindungsgemäß besonders bevorzugtes Clathrat kann z.B. über die Firma "etprojekt" mit der Handelsbezeichnung "SinoAir®" käuflich erworben werden. Dieser Wirkstoff besteht in der Hauptsache aus pflanzlichen Clathraten. Um lange Betriebszeiten zu ermöglichen, wird der Wirkstoff mit ätherischen Essenzen in einem aus pflanzlichen Stoffen gewonnenem Gel zusammengeführt. Hierdurch kann sich der Einsatz bis zu einem Jahr realisieren lassen. Bei den Einschlussverbindungen und den Clathraten handelt es sich um geruchsneutralisierende Stoffe, da Geruchspartikel in die Hohlräume der Einschlussverbindung und/oder der Clathrate eingelagert werden können. Hierdurch kann erreicht werden, dass die Geruchspartikel nicht mehr wahrnehmbar sind, obwohl diese, von der Einschlussverbindung und/oder den Clathraten umschlossen, immer noch in der Luft vorhanden sind.

Besonders vorzugsweise gibt die Rippeneinrichtung geruchsüberdeckende Stoffe, wie z.B. Parfümstoffe in den Saugluftstrom ab. Hierdurch können üble Gerüche von den Parfümstoffen überdeckt werden, um von dem Benutzer nicht mehr wahrgenommen werden zu können. Besonders vorzugsweise finden als geruchsüberdeckende Stoffe Parfümstoffe, wie z.B. Rosmarin, Zypresse, Jasmin und/oder Zitrone Verwendung, Insbesondere bei einer Kombination von geruchsneutralisierenden und geruchsüberdeckenden Stoffen ist erreichbar, dass restliche Geruchspartikel, die nicht neutralisiert werden konnten, von angenehmeren Gerüchen überdeckt werden, und somit nicht mehr wahrgenommen werden können. Es konnte ermittelt werden, dass Benutzer bei einem vollkommen geruchsneutralen Saugluftstrom den subjektiven Eindruck einer defekten Rippeneinrichtung haben, die keine Neutralisierung von Gerüchen bewirken kann. Durch die Kombination von geruchsneutralisierenden und geruchsüberdeckenden Stoffen kann somit dem Benutzer der Eindruck einer funktionierenden Rippeneinrichtung besser vermittelt werden. Als besonders angenehmer Geruch hat sich hierbei Zitronenduft herausgestellt, der besonders vorzugsweise Verwendung findet.

Werden von der Rippeneinrichtung nur Stoffe in den Saugluftstrom abgegeben, kann dies einen besonders geringen Durchströmwiderstand der Rippeneinrichtung ermöglichen, was demzufolge nur eine minimale Verringerung der Saugleistung bei Einbringen der Rippeneinrichtung in den Saugluftstrom zur Folge haben kann. Es sind aber auch alternative Ausführungsformen der Erfindung denkbar, in denen die Rippeneinrichtung dem Saugluftstrom Partikel entnimmt, und somit als Filter einsetzbar sein kann. Somit kann die Rippeneinrichtung dem Saugluftstrom auch Feuchtigkeit entziehen. Insbesondere sind hierzu auch Kombinationen der Ausführungsformen der Erfindung denkbar, in denen die Rippeneinrichtung dem Saugluftstrom Partikel entnimmt und zugleich Stoffe in den saugluftstrom abgibt. Hierdurch kann vorteilhafterweise eine Filterung von Partikeln aus dem Saugluftstrom mit einer Bekämpfung von Gerüchen kombiniert werden.

Die Erfindung weiterbildend ist vorzugsweise vorgesehen, dass die Rippeneinrichtung ein Zusatzmaterial aufweist, um dem Saugluftstrom Partikel zu entnehmen und/oder Stoffe in den Saugluftstrom abzugeben. Besonders vorzugsweise ist das Zusatzmaterial in dem Halterahmen der Rippeneinrichtung angeordnet. Durch das Zusatzmaterial kann die Effektivität der Entnahme von Partikeln aus dem Saugluftstrom und/oder der Abgabe von Stoffen in die Saugluft erhöht werden. So kann das Zusatzmaterial z.B. als Aufnahmemittel zur Aufnahme für die Stoffe dienen, die von der Rippeneinrichtung in den Saugluftstrom abgegeben werden sollen.

In einer bevorzugten Ausführungsform des Staubsaugers enthält das Zusatzmaterial geruchsneutralisierende und/oder geruchsüberdeckende Stoffe. Besonders vorzugsweise werden die geruchsneutralisierenden und/oder geruchsüberdeckenden Stoffe an den Saugluftstrom abgegeben. Das Zusatzmaterial enthält besonders vorzugsweise Adsorbensstoffe, z.B. Aktivkohle, und/oder Einschlussverbindungen, und/oder Clathrate und/oder Kombinationen hieraus. Aktivkohle und Clathrate können den Vorteil aufweisen, dass diese den Saugluftstrom nur in geringer Weise behindern und zudem eine lange Betriebsdauer der Rippeneinrichtung von z.B. ca. einem Jahr ermöglichen können. Besonders vorzugsweise finden als geruchsüberdeckende Stoffe Parfümstoffe, wie z.B. Rosmarin, Zypresse, Jasmin und/oder Zitrone Verwendung. Somit ist erreichbar, dass der Benutzer verschiedene, seinem persönlichen Geschmack entsprechende Gerüche auswählen kann. Das Zusatzmaterial enthält besonders vorzugsweise mikroorganische Stoffe, besonders vorzugsweise Bakterien und/oder andere Mikroorganismen auf. Hierdurch kann eine Zersetzung von Geruchsstoffen in harmlose Produkte wie z. B. Kohlendioxid und Wasser ermöglicht werden, sodass die Effizienz der Geruchsbekämpfung weiter erhöht werden kann.

Die Erfindung weiterbildend ist vorzugsweise vorgesehen, dass das Zusatzmaterial mehrere, vorzugsweise wenigstens drei, Schichten gleicher oder unterschiedlicher Stärke aufweist, welche vorzugsweise senkrecht in Richtung des Saugluftstroms angeordnet sind. Hierdurch kann vorteilhafterweise die Abgabe von geruchsüberdeckenden und/oder geruchsneutralisierenden Stoffe an den Saugluftstrom, sowie die Entnahme von Partikeln aus dem Saugluftstrom in beliebiger Weise miteinander kombiniert werden.

Erfindungsgemäß ist vorzugsweise vorgesehen, dass das Zusatzmaterial der Rippeneinrichtung in einem Hilfsrahmen gehaltert ist. Besonders vorzugsweise weist der Hilfsradmen Rippen und/oder Fenster auf, wodurch der Hilfsrahmen Kammern bildet, in denen das Zusatzmaterial besonders vorzugsweise angeordnet ist. Ein besonders bevorzugter Hilfsrahmen ist in mehrere, vorzugsweise wenigstens vier Kammern gleicher oder unterschiedlicher Größe unterteilt. Besonders vorzugsweise wird das Zusatzmaterial zwischen zwei, sich über die Fenster erstreckende, luftdurchlässige Stoffe in dem Hilfsrahmen gehaltert. Besonders vorzugsweise ist das Zusatzmaterial granulatförmig, das in dem Hilfsrahmen besonders gut lagerbar ist. Es sind auch Ausführungen der Erfindung denkbar, in denen das Zusatzmaterial der Rippeneinrichtung über den Hilfsrahmen in dem Halterahmen der Rippeneinrichtung gehaltert wird. Der Hilfsrahmen wird besonders vorzugsweise über eine formschlüssige Verbindung, z.B. eine Schnapp- oder Rastverbindung an dem Halterahmen der Rippeneinrichtung befestigt. Vorteilhafterweise kann somit ein universaler Halterahmen, der an festen, beweglichen oder auswechselbaren Teilen des Staubsaugers angeordnet sein kann, ermöglicht werden. Zudem kann eine besonders einfache und kostengünstige Herstellung der erfindungsgemäßen Rippeneinrichtung mit einem Zusatzmaterial, das z.B. granulatförmig oder-schüttfähig ausgebildet ist, ermöglicht werden. Dadurch dass der Halterahmen mehrere Kammern aufweist, kann eine gleichmäßige Verteilung des Zusatzmaterials selbst bei vertikaler Anordnung der Rippeneinrichtung erzielt werden. Dies kann eine gleichmäßige Durchströmung des Zusatzmaterials ermöglichen. Durch die Verwendung der zwei luftdurchlässigen Stoffe, zwischen denen das Zusatzmaterial gehaltert werden kann, kann eine Entnahme von Partikeln aus dem Saugluftstrom mit einer Bekämpfung von Gerüchen kombiniert werden. Es ist weiter erreichbar, dass verschiedene Zusatzmaterialarten in verschiedene Kammern gefüllt werden können, um die Funktionalität der Rippeneinrichtung noch umfangreicher gestalten zu können. Diese-Ausführung der Rippeneinrichtung mit einem Hilfsrahmen kann weiter den Vorteil besitzen, dass sowohl geruchsneutralisierende als auch geruchsüberdeckende Stoffe z.B. zur Bekämpfung von Gerüchen und zur Abgabe von Parfümstoffen, als Zusatzmaterial besonders einfach in die Rippeneinrichtung eingebracht werden können, um während des bestimmungsgemäßen Betriebs des Staubsaugers in die Saugluft abgegeben werden zu können. Ein weiterer erreichbarer Vorteil kann sein, dass nur der Hilfsrahmen und nicht die gesamte Rippeneinrichtung ausgewechselt werden muss, um aufgebrauchtes Zusatzmaterial durch neues Zusatzmaterial zu ersetzen.

Die Erfindung weiterbildend ist vorzugsweise vorgesehen, dass die Rippeneinrichtung zumindest eine Bypassöffnung aufweist, um einen ersten Raum vor der Rippeneinrichtung mit einem zweiten Raum nach der Rippeneinrichtung zu verbinden. Durch die erfindungsgemäße Bypassöffnung kann erzielt werden, dass bei bestimmungsgemäßem Betrieb des Staubsaugers zumindest ein Teil des Saugluftstroms durch das Zusatzmaterial strömt, und der andere Teil des Saugluftstroms durch die Bypassöffnung an dem Zusatzmaterial vorbeiströmt. Somit kann ein Teil der Saugluft die Rippeneinrichtung ungehindert passierten, was einen geringeren Druckverlust an der Rippeneinrichtung zur Folge haben kann. Die Luftleistung des Staubsaugers kann durch die Rippeneinrichtung somit nur unmerklich verringert werden. Bei einem erfindungsgemäßen Staubsauger ist also selbst mit einer hinzugefügten Rippeneinrichtung eine annähernd konstante Saugleistung des Staubsaugers erreichbar. Ein weiterer erreichbarer Vorteil der erfindungsgemäßen Rippeneinrichtung kann sein, dass sich die Wirkungsdauer der Rippeneinrichtung verlängern kann, wodurch diese seltener gewechselt werden muss.

In einer Ausführung der Erfindung ist die Rippeneinrichtung der Staubabscheideeinheit in Richtung des Saugluftstroms nachgelagert. Somit ist die Rippeneinrichtung in der bereits von Staub befreiten Saugluft angeordnet, wodurch eine effizientere Wirkungsweise der Rippeneinrichtung ermöglicht werden kann, da die Anzahl an Partikeln, die durch die Rippeneinrichtung strömen, bereits durch die Staubabscheideeinheit reduziert wurde. Besonders vorzugsweise ist die Rippeneinrichtung als Filter zur Entnahme von Partikeln aus dem Saugluftstrom und/oder als Abgabevorrichtung zur Abgabe von Stoffen in den Saugluftstrom in dem Staubsauger angeordnet sein. Besonders vorzugsweise ist die Rippenstruktur ein Motorschutzfilter und/oder ein Ausblasfilter. Allerdings kann die Rippeneinrichtung aber auch ohne Filter oder Abgabefunktion z.B. als Eingreifschutz der Staubabscheideeinheit nachgelagert sein. Die der Staubabscheideeinheit nachgelagerte Rippeneinrichtung kann vorteilhafterweise visuell von dem Benutzer leicht erkannt und leicht greifbar sein. Es sind aber auch Ausführungsformen der Erfindung möglich, in denen die Rippeneinrichtung der Staubabscheideeinheit in Richtung des Saugluftstromes vor- oder zwischengelagert ist.

In einer weiteren bevorzugten Ausführungsform weist der Staubsauger einen Hauptfilter auf, mit dem die Rippeneinrichtung verbindbar ist. Unter einem Hauptfilter ist ein Filter des Staubsaugers zu verstehen, der in dem Saugluftstrom angeordnet ist, und der der Staubabscheideeinheit vor-, zwischen- oder nachgelagert ist. Ein Hauptfilter kann dabei sowohl ein Vor-, ein Zwischen- oder ein Nachfilter sein, der je nach Anordnung in dem Saugluftstrom unterschiedlich große Staubpartikel aus dem Saugluftstrom filtern kann. Beispielsweise kann ein Zwischenfilter ein sog. Motorschutzfilter sein, das sich in oder vor einer Ansaugöffnung der Motor-Gebläseeinheit befinden kann. Das Motorschutzfilter ist besonders vorzugsweise der Staubabscheideeinheit nachgeschaltet, um für einen Schutz der Motorgebläseeinheit vor Partikeln in der angesaugten Luft bei fehlender Staubabscheideeinheit, beispielsweise hervorgerufen durch eine Fehlbedienung, zu sorgen. Weiter kann ein Motorschutzfilter die Motorgebläseeinheit vor Partikeln schützen, die nicht von der Staubabscheideeinheit aufgenommen wurden. Als Nachfilter kann ein Ausblasfilter verstanden werden, das den Abluftstrom bei dem Austritt aus einem Staubsaugergehäuse filtern kann. Ein Abluftfilter kann vorteilhafterweise die aus einem Staubsauger austretende Luft von Partikeln reinigen, die beispielsweise aus dem Abrieb der Kohlebürsten des Staubsaugermotors entstehen können, und die für den Benutzer eine Gesundheitsgefährdung darstellen können. Ein als Vorfilter der Staubabscheideeinheit vorgeschalteter Hauptfilter kann zur Filterung von großen Partikeln aus dem Saugluftstrom dienen. Hierbei kann insbesondere verhindert werden, dass versehentlich eingesaugte Partikel, wie z.B. Legosteine, in die Staubabscheideeinheit gelangen, um diese ohne Mühe dem Staubsauger entnehmen zu können. Ein Vorfilter kann beispielsweise auch ein Feuchtigkeitsfilter sein, das dem Saugluftstrom Feuchtigkeit entziehen kann, um so ein Verklumpen von Staub in der Staubabscheideeinheit verhindern zu können.

Die Rippeneinrichtung kann dem Hauptfilter in Strömungsrichtung vor- oder nachgeschaltet sein. Eine vorgeschaltete Rippeneinrichtung kann die Filterwirkung des Hauptfilters verstärken, bzw. dessen Standzeit verlängern. Bei einer nachgeschalteten Rippeneinrichtung kann die Betriebsdauer der Rippeneinrichtung erhöht werden. Ein weiterer erreichbarer Vorteil der erfindungsgemäßen Rippeneinrichtung ist, dass die Rippeneinrichtung mit verschiedenen Hauptfiltern verbindbar sein kann, und somit für unterschiedliche Staubsaugersysteme nachrüstbar sein kann. Besonders vorzugsweise deckt die Rippeneinrichtung den Hauptfilter zumindest teilweise ab. Hierdurch kann der Saugluftstrom die Rippeneinrichtung zumindest teilweise umströmen. Somit ist erreichbar, dass die Rippeneinrichtung nicht von dem gesamten Saugluftstrom durchströmt wird, wodurch die Lebensdauer der Rippeneinrichtung erhöht werden kann. Weiter kann dadurch eine kleine Filtereinheit auch auf ein größeres Hauptfilter aufgesetzt werden. Somit kann die Rippeneinrichtung an verschiedenste, bereits bestehende Häuptfilter angesetzt werden.

Eine erfindungsgemäß bevorzugte Rippeneinrichtung ist mit dem Hauptfilter kraftschlüssig verbindbar. Besonders vorzugsweise ist die Rippeneinrichtung mit zumindest einer Rippe des Hauptfilters kraftschlüssig verbindbar. Besonders vorzugsweise ist die Rippeneinrichtung an das Hauptfilter auf- oder einsteckbar. Besonders vorzugsweise ist die Rippeneinrichtung aus einer Fügerichtung an zumindest eine Rippe des Hauptfilters steckbar. Die erfindungsgemäße Rippeneinrichtung kann vorteilhafterweise in einem Staubsauger an ein Hauptfilter gesteckt werden, also mit diesem kraftschlüssig verbunden werden. Die steckbare Ausführung der erfindungsgemäßen Rippeneinrichtung kann ein einfaches Trennen und Verbinden der Rippeneinrichtung mit dem Hauptfilter ermöglichen. Es sind allerdings auch Ausführungen der Erfindung möglich, in denen die Rippeneinrichtung mit dem Hauptfilter formschlüssig verbindbar ist, z.B. mit einem Rast- oder Schnappverschluss. Eine formschlüssige Verbindung kann ein versehentliches Trennen von Rippeneinrichtung und Hauptfilter verhindern. Weiter kann mit einer form- und/oder kraftschlüssigen Verbindung der erfindungsgemäßen Rippeneinrichtung mit einem Hauptfilter vermieden werden, dass die Rippeneinrichtung ohne den Hauptfilter benutzbar ist, wodurch eine Fehlbedienung durch den Benutzer umgangen werden kann.

Erfindungsgemäß ist vorzugsweise vorgesehen, dass die Rippeneinrichtung zumindest eine Aussparung aufweist, welche mit zumindest einer Rippe des Hauptfilters korrespondiert und die Rippeneinrichtung mit der Aussparung an die Rippe des Hauptfilters steckbar ist. Besonders vorzugsweise weist die Rippeneinrichtung zumindest eine Aussparung an dem Halterahmen auf, welche mit zumindest einer Rippe des Hauptfilters korrespondiert, wodurch die Rippeneinrichtung mit der Aussparung an die Rippe des Hauptfilters steckbar ist. Unter einer Aussparung kann eine Nut in dem Halterahmen verstanden werden, welche zu einer Randseite hin geöffnet ist. Hierdurch ist erreichbar, dass die Rippeneinrichtung auf das Hauptfilter aufgesteckt und durch eine kraftschlüssige Verbindung auf dem Hauptfilter gehalten werden kann, wobei die Aussparung auf eine Rippe aufgesteckt sein kann. Während des Anbringens der Rippeneinrichtung an das Hauptfilter kann das Hauptfilter unverändert in seiner Lage bleiben. Dadurch kann sichergestellt werden, dass die Funktionalität und/oder die Effektivität des Hauptfilters nicht beeinträchtigt wird. Besonders vorzugsweise ist der Querschnitt der Aussparung und/oder der Rippe entlang der Richtung der Lösekraft keilförmig ausgeführt. Mit einer solchen Ausführung können höhere Lösekräfte erzielt werden. Eine kraftschlüssige Verbindung, die durch zumindest eine Aussparung und zumindest eine mit dieser Aussparung korrespondierenden Rippe hergestellt wird, kann besonders einfach realisierbar sein. Insbesondere kann eine erfindungsgemäße Rippeneinrichtung, die zumindest eine Aussparung an dem Halterahmen aufweist, besonders einfach und kostengünstig, z.B. durch ein Kunststoffspritzgussverfahren, herstellbar sein. In einer alternativen Ausführungsform befindet sich zumindest eine Rippe an dem Halterahmen, die mit einer Aussparung, z.B. an dem Hauptfilter und/oder dem Staubsauger korrespondiert.

Besonders vorzugsweise weist zumindest eine Aussparung eine größere Erstreckung als die entsprechend korrespondierende Rippe auf. Somit kann bei der Verbindung von der Rippeneinrichtung mit einer Rippe ein Teil der Aussparung, der nicht von der Rippe ausgefüllt ist, eine Bypassöffnung bilden. Vorteilhafterweise kann bei dieser Ausgestaltung die Größe der Bypassöffnung über die Erstreckung der Aussparung bestimmt werden. Insbesondere bei dieser Ausgestaltung der Bypassöffnung kann eine besonders einfache Herstellung der erfindungsgemäßen Rippeneinrichtung, z.B. durch ein Spritzgußverfahren, ermöglicht werden. Die Erfindung weiterbildend kann die Bypassöffnung auch durch eine separate Öffnung in der Rippeneinrichtung realisiert werden. Insbesondere sind auch Kombinationen möglich, in denen die Saugluft durch die separate Öffnung und/oder durch zumindest eine Aussparung mit einer größeren Erstreckung als die entsprechend korrespondierende Rippe an dem Zusatzmaterial vorbeiströmen kann.

In einer weiteren Ausführung der Erfindung ist die Rippeneinrichtung einstückig aus Kunststoff gefertigt. Hierdurch ist eine mechanisch belastbare und leicht mit dem Staubsauger verbindbare Rippeneinrichtung erreichbar. Weiter können einfache und kostengünstige Herstellungsverfahren, wie z.B. Kunststoffspritzgussverfahren zur Herstellung der Rippeneinrichtung verwendet werden.

Die vorliegende Erfindung ermöglicht mit einfachen konstruktiven und kostengünstigen Mitteln einen Staubsauger mit einer Rippeneinrichtung bereitzustellen. Insbesondere kann eine für den Benutzer eine augenfällige Geometrie ermöglicht werden. Weiter kann durch die Rippeneinrichtung eine Abstütz- und/oder Sicherheitsfunktion ermöglichen.

### Kurzbeschreibung der Zeichnungen

Weitere vorteilhafte Ausgestaltungen werden nachfolgend an Hand dreier in den Zeichnungen dargestellter Ausführungsbeispiele, auf welches die Erfindung jedoch nicht beschränkt ist, näher beschrieben.

Es zeigen schematisch:
- Fig. 1: einen Staubsauger mit seinen Komponenten in einer Schnittdarstellung;
- Fig. 2: eine Rippeneinrichtung in einer perspektivischen Darstellung;
- Fig. 3: eine Rippeneinrichtung gem. Fig. 2 in einer Ansicht von oben;
- Fig. 4: eine mit einem Hauptfilter kraftschlüssig verbundene Rippeneinrichtung gem. Fig. 2 mit Hilfsrahmen in einer Schnittdarstellung;
- Fig. 5: eine mit einem Hauptfilter kraftschlüssig verbundene Rippeneinrichtung gem. Fig. 4 in einer perspektivischen Darstellung;
- Fig. 6: eine Detail der Rippeneinrichtung nach Detail A aus Fig. 5;
- Fig. 7: eine Rippeneinrichtung gem. Fig. 2 mit einem Stellelement außerhalb der Ruhestellung in einer Seitenansicht;
- Fig. 8: ein Stellelement mit elastisch verformbarem Element in einer Schnittdarstellung;
- Fig. 9: eine mit einem Hauptfilter kraftschlüssig verbundene Rippeneinrichtung gem. Fig. 2 in einer perspektivischen Darstellung.
und schließlich

Fig. 10 ein Motorschutzfilter aus dem Stand der Technik.

### Ausführliche Beschreibung anhand von drei Ausführungsbeispielen

Bei der nachfolgenden Beschreibung dreier bevorzugter Ausführungsformen der vorliegenden Erfindung bezeichnen gleiche Bezugszeichen gleiche oder vergleichbare Komponenten.

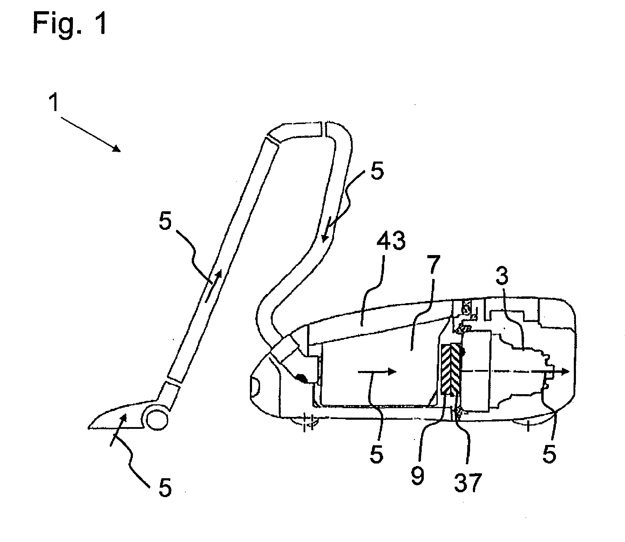

Das erste Ausführungsbeispiel wird im Folgenden anhand der Fig. 1 bis 7 erläutert. Fig. 1 zeigt einen Staubsauger 1 mit einer Motor-Gebläseeinheit 3 zur Erzeugung eines Saugluftstroms 5, und einer in einem Staubraum 43 angeordneten Staubabscheideeinheit 7 zur Abscheidung von Staub aus dem Saugluftstrom 5. An dem Staubsauger 1 ist weiter ein Hauptfilter 37, das ein Motorschutzfilter ist, in dem Saugluftstrom 5 angeordnet, das der Staubabscheideeinheit 7 in Richtung des Saugluftstroms 5 nachgelagert und der Motor-Gebläseeinheit 3 in Richtung des Saugluftstroms 5 vorgelagert ist. Weiter ist eine Rippeneinrichtung 9 in dem Saugluftstrom 5 des Staubsaugers 1 angeordnet, die mit dem Hauptfilter 37 und somit mit dem Staubsauger 1 kraftschlüssig verbunden ist, und die dadurch der Staubabscheideeinheit 7 in Richtung des Saugluftstromes 5 nachgelagert ist. Hierzu ist die Rippeneinrichtung 9 auf das Hauptfilter 37 aufgesteckt, und ist dabei dem Hauptfilter 37 in Richtung des Saugluftstromes 5 vorgeschaltet.

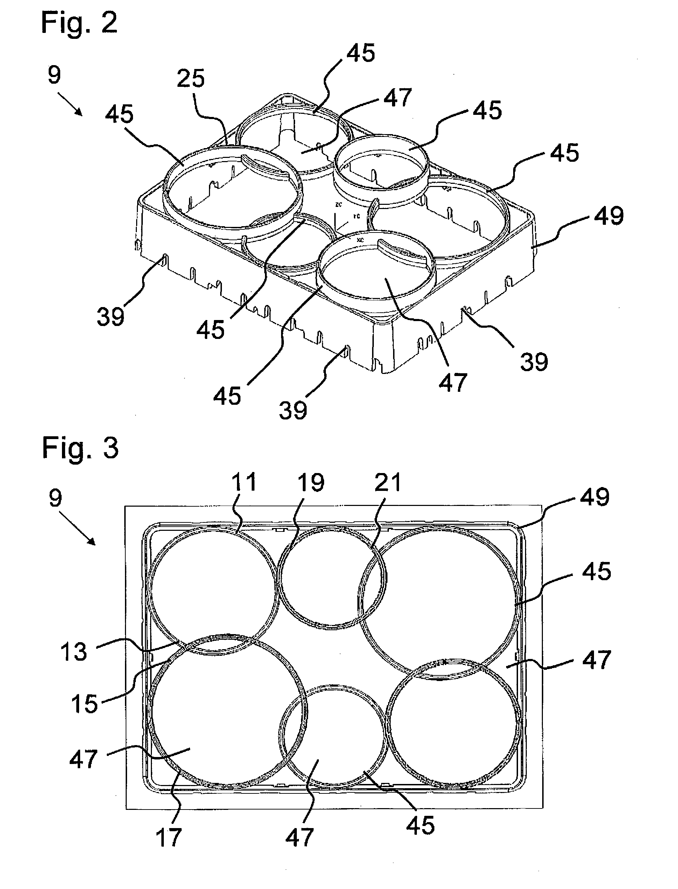

Fig. 2 zeigt die Rippeneinrichtung 9 in einer perspektivischen Darstellung. Fig. 3 zeigt die Rippeneinrichtung 9 gemäß Fig. 2 in einer Ansicht von oben. Die Rippeneinrichtung 9 weist sechs Rippen 45 auf, unter anderem eine erste Rippe 11 mit einem ersten Rippenabschnitt 13, eine zweite Rippe 17 mit einem zweiten Rippenabschnitt 15 und eine weitere, dritte Rippe 21 mit einem weiteren, dritten Rippenabschnitt 19 auf, wobei der erste 13, der zweite 15 und der dritte 19 Rippenabschnitt einen Kreisbogen bilden, also bogenförmig sind. Neben der ersten 11, der zweiten 17 und der dritten 21 Rippe weist die Rippeneinrichtung 9 noch drei Rippen auf, so dass insgesamt sechs Rippen 45 an der Rippeneinrichtung 9 angeordnet sind. Hierbei ist die erste 11, die zweite 17 sowie die dritte 21 kreisförmig ausgebildet, wobei sich der erste 13, der zweite 15 sowie der dritte Rippenabschnitt 19 jeweils über die gesamte Rippe erstreckt. Die Rippen 11, 17, 19 sind so an der Rippeneinrichtung 9 angeordnet, dass sich der erste 13 und der zweite Rippenabschnitt 15 zwei Mal überschneiden, also berühren, und sich der erste 13 und der dritte Rippenabschnitt 19 tangential berühren. Die erste 11, zweite 17 und dritte 21 sowie alle restlichen Rippen der Rippeneinrichtung 9 weisen eine konstante Rippenhöhe 23 auf, wobei sich die konstante Rippenhöhe 23 der ersten 11 von der konstanten Rippenhöhe 23 der zweiten Rippe 17, sowie die konstante Rippenhöhe 23 der ersten 11 von der konstanten Rippenhöhe 23 der dritten Rippe 21 unterscheidet. Ferner weisen sämtliche Rippen 45 eine unterschiedliche konstante Rippenhöhe 23 auf. Zudem stehen die Rippenränder sämtlicher Rippen aus der Rippeneinrichtung heraus, wobei die aus der Rippeneinrichtung 9 herausstehenden Rippenränder 25 der Rippen 45 in zumindest zwei Ebenen liegen, die aus Darstellungsgründen nicht in den Fig. gezeigt sind. Somit kann ein flächiges Anliegen und Ansaugen des Staubbeutels, also der Staubabscheideeinheit 7 an die Rippeneinrichtung 9 verhindert werden. Durch die Fenster 47, die durch die Rippen 45 abgegrenzt werden, kann der Saugluftstrom 5 die Rippeneinrichtung 9 durchströmen.

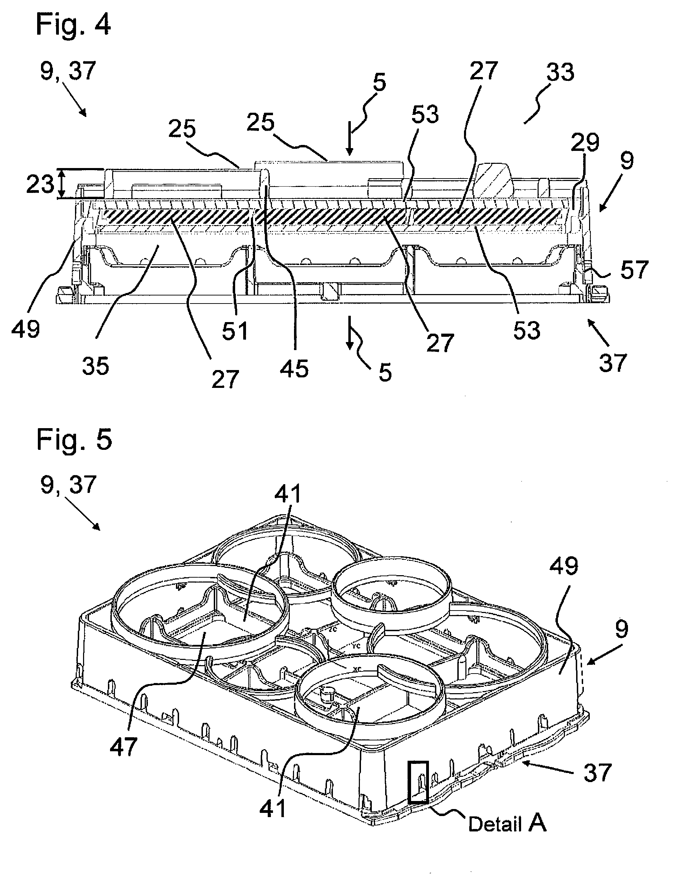

Die Rippeneinrichtung 9 weist einen Halterahmen 49, einen Hilfsrahmen 29 und ein Zusatzmaterial 27, das geruchsneutralisierenden und geruchsüberdeckenden Stoffen enthält, auf. Die mit dem Hauptfilter 37 kraftschlüssig verbundene Rippeneinrichtung 9, der Hilfsrahmen 29 sowie das Zusatzmaterial 27 sind in Fig. 4 in einer Schnittdarstellung und in Fig. 5 in einer perspektivischen Darstellung gezeigt. Aus Darstellungsgründen sind der Hilfsrahmen 29 sowie das Zusatzmaterial 27 nicht in Fig. 5 gezeigt. Während des Staubsaugerbetriebs gibt die Rippeneinrichtung 9, die eine Abgabevorrichtung ist, geruchsneutralisierende und geruchsüberdeckende Stoffe in den Saugluftstrom 5 ab. Durch das Zusatzmaterial 27 kann die Rippeneinrichtung 8 dem Saugluftstrom 5 Partikel entnehmen und geruchsneutralisierende und geruchsüberdeckende Stoffe in den Saugluftstrom 5 abgeben. Das Zusatzmaterial 27 wird in dem Hilfsrahmen 29 gehaltert, der Rippen 51 und Fenster 47 aufweist. An dem Hilfsrahmen 29 sind zwei luftdurchlässige Stoffe 53 angebracht, ein Stoff 53 an der Oberseite, der andere Stoff 53 an der Unterseite des Hilfsrahmens 29, die sich über die Fenster 47 des Hilfsrahmens 29 erstrecken. Somit wird das Zusatzmaterial 27 von den Stoffen 53 in dem Hilfsrahmen 29 gehaltert, wodurch ein besonders einfaches Herstellungsverfahren ermöglicht wird.

Die geruchsneutralisierenden Stoffe werden in Form von Käfigverbindungen, sogenannten Clathraten in den Saugluftstrom 5 abgegeben, wobei die Clathrate über die Firma "etprojekt" mit der Handelsbezeichnung "SinoAir®" käuflich erworben wurden. Dieser Wirkstoff besteht in der Hauptsache aus pflanzlichen Clathraten. Um lange Betriebszeiten zu ermöglichen, wird der Wirkstoff mit ätherischen Essenzen in einem aus pflanzlichen Stoffen gewonnenem Gel zusammengeführt. Hierdurch kann sich der Einsatz bis zu einem Jahr realisieren lassen. Um das Wohlbefinden des Benutzers zu erhöhen, werden die geruchsüberdeckenden Stoffe als Parfümstoffe mit der Duftnote Zitrone in den Saugluftstrom 5 abgegeben.

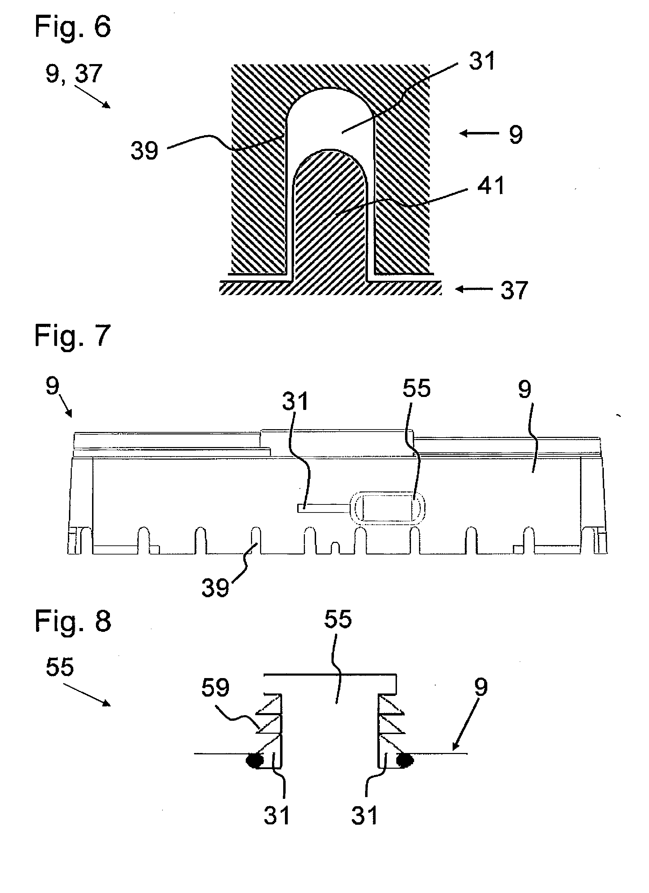

An der Rippeneinrichtung 9 sind Aussparungen 39 angeordnet, die mit den Rippen 41 des Hauptfilters 37 korrespondieren. Die mit den Aussparungen 39 des Halterahmens 49 korrespondierenden Rippen 41 des Hauptfilters 37 sind aus Darstellungsgründen nicht gezeigt. Allerdings können diese Rippen 41 als Verlängerung der dargestellten Rippen 41 gedacht werden. Wie aus Fig. 6 ersichtlich, weisen die Aussparungen 37 eine größere Erstreckung als die entsprechend korrespondierende Rippe 41 auf, wodurch eine Bypassöffnung 31 an der Rippeneinrichtung 9 entsteht, die einen ersten Raum 33 vor der Rippeneinrichtung 9 mit dem zweiten Raum 35 nach der Rippeneinrichtung 9 verbindet. Der zweite Raum 35 beschränkt sich nicht auf den Raum zwischen Rippeneinrichtung 9 und Hauptfilter 37, sondern kann sich auch über das Hauptfilter 37 in Richtung des Saugluftstroms 5 hinaus erstrecken. Die Rippeneinrichtung 9 kann mit den Aussparungen 39 an die Rippen 41 des Hauptfilters 37 gesteckt werden, und ist somit mit zumindest einer Rippe 41 kraftschlüssig verbunden.

Neben den Bypassöffnungen 31 an den Aussparungen 39, von denen eine in Fig. 6 gezeigt ist, weist die Rippeneinrichtung 9 eine weitere Bypassöffnung 31 auf, dessen Öffnungsquerschnitt über ein Stellelement 55, das ein Schieberegler ist, veränderbar ist. Das in Fig. 7 gezeigte Stellelement 55 ist in eine Ruhestellung und eine Stellung außerhalb der Ruhestellung zu bringen ist, wobei in der Ruhestellung die Bypassöffnung 31 verschlossen ist, und in der Stellung außerhalb der Ruhestellung eine Verbindung über die Bypassöffnung 31 zwischen dem ersten 33 und dem zweiten Raum 35 besteht. In Fig. 7 befindet sich das Stellelement 55 in einer Stellung außerhalb der Ruhestellung, und ist manuell betätigbar. Der Benutzer kann somit selbst den Öffnungsquerschnitt der Bypassöffnung 31 verändern, um bei Bedarf, z.B. bei einem Auftreten von üblen Gerüchen, den Öffnungsquerschnitt zu verringern, und den Effekt des Zusatzmaterials 27, z.B. die Neutralisierung von Gerüchen, zu erhöhen, da bei einem geringeren Öffnungsquerschnitt ein größerer Teil des Saugluftstroms 5 durch das Zusatzmaterial 27 strömen kann. Der Halterahmen 49 der Rippeneinrichtung 9 weist Dichtflächen 57 auf, die den zweiten Raum 35, der sich zwischen Rippeneinrichtung 9 und Hauptfilter 37 befindet, hermetisch abdichten, so dass der Saugluftstrom 5 nur durch das Zusatzmaterials 27 oder die Bypassöffnungen 31 strömen kann.

Weiter ist die Rippeneinrichtung 9 einstückig aus Kunststoff gefertigt, damit die Rippeneinrichtung 9 mechanisch belastbarer und leichter mit dem Staubsauger 1 verbindbar ist. Zur Herstellung der Rippeneinrichtung 9 wird ein Kunststoffspritzgussverfahren verwendet, wodurch die Rippeneinrichtung 9 einfach und kostengünstig herzustellen ist.

In einem zweiten Ausführungsbeispiel, dargestellt in Fig. 8, das sich ansonsten nicht von dem ersten Ausführungsbeispiel unterscheidet, weist das Stellelement 55 eine Feder, also ein elastisch verformbares Element 59 auf, und so ausgebildet ist, dass es sich bei Überschreitung eines Schwellwertes des Differenzdruckes zwischen den in den beiden Räumen 33, 35 anliegenden Drücken in einer Stellung außerhalb der Ruhestellung befindet, und dass es sich bei Unterschreitung des Schwellwertes in der Ruhestellung befindet.

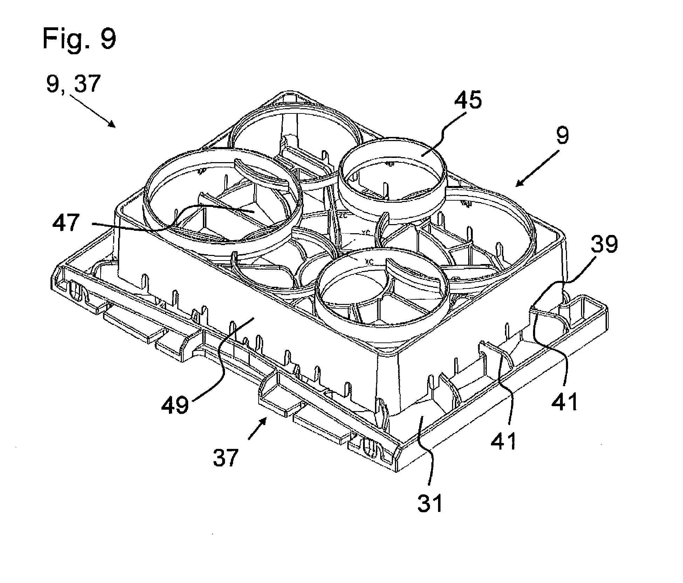

In einem dritten Ausführungsbeispiel, dargestellt in Fig. 9, das sich ansonsten nicht von dem ersten sowie dem zweiten Ausführungsbeispiel unterscheidet, ist die Rippeneinrichtung 9 auf ein Hauptfilter 37 gesteckt, wobei die Rippeneinrichtung 9 das Hauptfilter 37 nur teilweise abdeckt. Somit entstehen weitere Bypassöffnungen 31, durch die die Saugluft an dem Zusatzmaterial 27 der Rippeneinrichtung 9 vorbeiströmen kann. Somit wird die Rippeneinrichtung 9 nicht mehr von der gesamten Saugluft durchströmt, wodurch sich die Lebensdauer der Rippeneinrichtung 9 weiter erhöht. In diesem Fall muss der Benutzer das Zusatzmaterial 27 nicht mehr so häufig austauschen.

Die vorliegende Erfindung ermöglicht mit einfachen konstruktiven und kostengünstigen Mitteln einen Staubsauger mit einer Rippeneinrichtung bereitzustellen. Insbesondere kann eine für den Benutzer eine augenfällige Geometrie ermöglicht werden. Weiter kann durch die Rippeneinrichtung eine Abstütz- und/oder Sicherheitsfunktion ermöglichen.

Die in der vorstehenden Beschreibung, den Ansprüchen und den Zeichnungen offenbarten Merkmale können sowohl einzeln als auch in beliebiger Kombination für die Verwirklichung der Erfindung in ihren verschiedenen Ausgestaltungen von Bedeutung sein.

### Bezugszeichenliste

- 1: Staubsauger
- 3: Motor-Gebläseeinheit
- 5: Saugluftstrom
- 7: Staubabscheideeinheit
- 9: Rippeneinrichtung
- 11: erste Rippe
- 13: erster Rippenabschnitt
- 15: zweiter Rippenabschnitt
- 17: zweite Rippe
- 19: weiterer (dritter) Rippenabschnitt
- 21: weitere (dritte) Rippe
- 23: Rippenhöhe
- 25: Rippenrand
- 27: Zusatzmaterial
- 29: Hilfsrahmen
- 31: Bypassöffnung
- 33: erster Raum
- 35: zweiter Raum
- 37: Hauptfilter
- 39: Aussparung
- 41: Rippe des Haupfilters
- 43: Staubraum
- 45: Rippe der Rippeneinrichtung
- 47: Fenster
- 49: Halterahmen
- 51: Rippe des Hilfsrahmens
- 53: luftdurchlässiger Stoff
- 55: Stellelement
- 57: Dichtfläche
- 59: elastisch verformbares Element

## Patentansprüche

1. Staubsauger (1) mit einer Motor-Gebläseeinheit (3) zur Erzeugung eines Saugluftstroms (5), mit einer Staubabscheideeinheit (7) zur Abscheidung von Staub, und mit einer Rippeneinrichtung (9), die zumindest eine erste Rippe (11) aufweist, wobei ein erster Rippenabschnitt (13) der ersten Rippe (11) und ein zweiter Rippenabschnitt (15) der ersten (11) oder einer zweiten Rippe (17) der Rippeneinrichtung (9) bogenförmig ausgebildet sind;
**dadurch gekennzeichnet,**
- **dass** sich der erste (13) und der zweite Rippenabschnitt (15) berühren;
- **dass** zumindest die erste (11), die zweite (17) und/oder eine weitere Rippe (21) eine konstante Rippenhöhe (23) aufweist;
- **und dass** die konstante Rippenhöhe (23) einer der Rippen (11, 17, 21) sich von der konstanten Rippenhöhe (23) einer anderen Rippe (11, 17, 21) unterscheidet.

2. Staubsauger (1) nach Anspruch 1, **dadurch gekennzeichnet, dass** wenigstens der erste (13), der zweite (15) und/oder ein weiterer Rippenabschnitt (19) einen Kreisbogen bildet.

3. Staubsauger (1) nach Anspruch 1 oder 2, **dadurch gekennzeichnet, dass** wenigstens die erste (11), die zweite (17) und/oder eine weitere (21) Rippe kreisförmig ausgebildet ist.

4. Staubsauger (1) nach einem der vorherigen Ansprüche, **dadurch gekennzeichnet, dass** zumindest ein Rippenrand (25) aus der Rippeneinrichtung (9) heraussteht.

5. Staubsauger (1) nach einem der vorherigen Ansprüche, **dadurch gekennzeichnet, dass** die aus der Rippeneinrichtung (9) herausstehenden Rippenränder (25) in zumindest zwei Ebenen liegen.

6. Staubsauger (1) nach einem der vorherigen Ansprüche, **dadurch gekennzeichnet, dass** die Rippeneinrichtung (9) in dem Saugluftstrom (5) angeordnet ist

7. Staubsauger (1) nach Anspruch 5, **dadurch gekennzeichnet, dass** die Rippeneinrichtung (9) eine Abgabevorrichtung ist, um Stoffe in den Saugluftstrom (5) abzugeben.

8. Staubsauger (1) nach Anspruch 5 oder 6, **dadurch gekennzeichnet, dass** die Rippeneinrichtung (9) ein Zusatzmaterial (27) aufweist, um dem Saugluftstrom (5) Partikel zu entnehmen und/oder Stoffe in den Saugluftstrom (5) abzugeben.

9. Staubsauger (1) nach Anspruch 7, **dadurch gekennzeichnet, dass** das Zusatzmaterial (27) in einem Hilfsrahmen (29) gelagert ist.

10. Staubsauger (1) nach einem der Ansprüche 5 bis 8, **dadurch gekennzeichnet, dass** die Rippeneinrichtung (9) zumindest eine Bypassöffnung (31) aufweist, um einen ersten Raum (33) vor der Rippeneinrichtung (9) mit einem zweiten Raum (35) nach der Rippeneinrichtung (9) zu verbinden.

11. Staubsauger (1) nach einem der Ansprüche 5 bis 9, **dadurch gekennzeichnet, dass** die Rippeneinrichtung (9) der Staubabscheideeinheit (7) in Richtung des Saugluftstroms (5) nachgeschaltet ist.

12. Staubsauger (1) nach einem der Ansprüche 5 bis 10, **dadurch gekennzeichnet, dass** der Staubsauger (1) einen Hauptfilter (37) aufweist, und die Rippeneinrichtung (9) mit dem Hauptfilter (37) verbindbar ist.

13. Staubsauger (1) nach Anspruch 11, **dadurch gekennzeichnet, dass** die Rippeneinrichtung (9) zumindest eine Aussparung (39) aufweist, welche mit zumindest einer Rippe (41) des Hauptfilters (37) korrespondiert und die Rippeneinrichtung (9) mit der Aussparung (39) an die Rippe (41) des Hauptfilters (37) steckbar ist.

## Claims

1. Vacuum cleaner (1) with a motor-fan unit (3) for creating a suction air flow (5), with a dust separator unit (7) for separation of dust and with a fin device (9) having at least one first fin (11), wherein a first fin section (13) of the first fin (11) and a second fin section (15) of the first (11) or of a second fin (17) of the fin device (9) are embodied in a curved shape;
**characterised in that**,
- the first (13) and the second fin section (15) are in contact with one another;
- at least the first (11), the second (17) and/or a further fin (21) has a constant fin height (23);
- and the constant fin height (23) of one of the fins (11, 17, 21) differs from the constant fin height (23) of another fin (11, 17, 21).

2. Vacuum cleaner (1) according to claim 1, **characterised in that** at least the first (13), the second (15) and/or a further fin section (19) forms an arc of a circle.

3. Vacuum cleaner (1) according to claim 1 or 2, **characterised in that** at least the first (11), the second (17) and/or a further (21) fin is embodied in the shape of a circle.

4. Vacuum cleaner (1) according to one of the preceding claims, **characterised in that** at least one fin edge (25) projects from the fin device (9).

5. Vacuum cleaner (1) according to one of the preceding claims, **characterised in that** the fin edges (25) projecting from the fin device (9) lie in at least two planes.

6. Vacuum cleaner (1) according to one of the preceding claims, **characterised in that** the fin device (9) is disposed in the suction air flow (5).

7. Vacuum cleaner (1) according to claim 5, **characterised in that** the fin device (9) is an emission device to emit material into the suction air flow (5).

8. Vacuum cleaner (1) according to claim 5 or 6, **characterised in that** the fin device (9) features an additional material (27) for extracting particles from the suction air flow (5) and/or emitting material into the suction air flow (5).

9. Vacuum cleaner (1) according to claim 7, **characterised in that** the additional material (27) is supported in an auxiliary frame (29).

10. Vacuum cleaner (1) according to one of claims 5 to 8, **characterised in that** the fin device (9) has at least one bypass opening (31) in order to connect a first space (33) in front of the fin device (9) with a second space (35) behind the fin device (9).

11. Vacuum cleaner (1) according to one of claims 5 to 9, **characterised in that** the fin device (9) is downstream from the dust separator unit (7) in the direction of the suction air flow (5).

12. Vacuum cleaner (1) according to one of claims 5 to 10, **characterised in that** the vacuum cleaner (1) has a main filter (37) and the fin device (9) is able to be connected to the main filter (37).

13. Vacuum cleaner (1) according to claim 11, **characterised in that** the fin device (9) has at least one recess (39) which corresponds to at least one fin (41) of the main filter (37) and the fin device (9) with the recess (39) is able to be pushed onto the fin (41) of the main filter (37).

## Revendications

1. Aspirateur (1) comprenant une unité moteur-ventilateur (3) destinée à produire un courant d'air d'aspiration (5), comprenant une unité de séparation de poussière (7) destinée à séparer la poussière, et comprenant un dispositif à nervures (9) qui présente au moins une première nervure (11), une première section de nervure (13) de la première nervure (11) et une deuxième section de nervure (15) de la première (11) ou d'une deuxième nervure (17) du dispositif à nervures (9) étant réalisées de manière arquée ;
**caractérisé**
- **en ce que** la première section de nervure (13) et la deuxième section de nervure (15) se touchent ;
- **en ce qu'**au moins la première nervure (11), la deuxième (17) et/ou une nervure supplémentaire (21) présentent une hauteur de nervure constante (23) ;
- et **en ce que** la hauteur de nervure constante (23) de l'une des nervures (11, 17, 21) se différencie de la hauteur de nervure constante (23) d'une autre nervure (11, 17, 21).

2. Aspirateur (1) selon la revendication 1, **caractérisé en ce qu'**au moins la première section de nervure (13), la deuxième (15) et/ou une section de nervure supplémentaire (19) forment un arc de cercle.

3. Aspirateur (1) selon la revendication 1 ou 2, **caractérisé en ce qu'**au moins la première section de nervure (11), la deuxième (17) et/ou une section de nervure supplémentaire (21) sont réalisées de manière circulaire.

4. Aspirateur (1) selon l'une quelconque des revendications précédentes, **caractérisé en ce qu'**au moins un bord de nervure (25) dépasse du dispositif à nervures (9).

5. Aspirateur (1) selon l'une quelconque des revendications précédentes, **caractérisé en ce que** les bords de nervure (25) dépassant du dispositif à nervures (9) sont situés dans au moins deux plans.

6. Aspirateur (1) selon l'une quelconque des revendications précédentes, **caractérisé en ce que** le dispositif à nervures (9) est disposé dans le courant d'air d'aspiration (5).

7. Aspirateur (1) selon la revendication 5, **caractérisé en ce que** le dispositif à nervures (9) est un dispositif de décharge afin de décharger des substances dans le courant d'air d'aspiration (5).

8. Aspirateur (1) selon la revendication 5 ou 6, **caractérisé en ce que** dispositif à nervures (9) présente une matière supplémentaire (27) afin d'extraire des particules du courant d'air d'aspiration (5) et/ou de décharger des substances dans le courant d'air d'aspiration (5).

9. Aspirateur (1) selon la revendication 7, **caractérisé en ce que** la matière supplémentaire (27) est logée dans un cadre auxiliaire (29).

10. Aspirateur (1) selon l'une quelconque des revendications 5 à 8, **caractérisé en ce que** le dispositif à nervures (9) présente au moins une ouverture by-pass (31) pour relier un premier espace (33) en amont du dispositif à nervures (9) à un deuxième espace (35) en aval du dispositif à nervures (9).

11. Aspirateur (1) selon l'une quelconque des revendications 5 à 9, **caractérisé en ce que** le dispositif à nervures (9) de l'unité de séparation de poussière (7) est installé en aval en direction du courant d'air d'aspiration (5).

12. Aspirateur (1) selon l'une quelconque des revendications 5 à 10, **caractérisé en ce que** l'aspirateur (1) présente un filtre principal (37), et **en ce que** le dispositif à nervures (9) peut être relié au filtre principal (37).

13. Aspirateur (1) selon la revendication 11, **caractérisé en ce que** le dispositif à nervures (9) présente au moins un évidement (39) qui correspond à au moins une nervure (41) du filtre principal (37) et **en ce que** le dispositif à nervures (9) peut être emboîté sur la nervure (41) du filtre principal (37) à l'aide de l'évidement (39).
